**Europäisches Patentamt**

**European Patent Office**

**Office européen des brevets**

(11) Veröffentlichungsnummer: **0 041 185**

**A1**

## EUROPÄISCHE PATENTANMELDUNG

(21) Anmeldenummer: **81103898.3**

(22) Anmeldetag: **20.05.81**

(51) Int. Cl.³: **G 01 S 7/52**
**G 01 S 7/62, G 06 F 15/336**
**G 10 K 11/34**

(30) Priorität: **02.06.80 DE 3020872**

(43) Veröffentlichungstag der Anmeldung:
**09.12.81 Patentblatt 81/49**

(84) Benannte Vertragsstaaten:
**AT CH DE FR GB LI NL**

(71) Anmelder: **SIEMENS AKTIENGESELLSCHAFT Berlin**
**und München**
**Postfach 22 02 61**
**D-8000 München 22(DE)**

(72) Erfinder: **Borburgh, Jacques, Dr.**
**Eichenstrasse 10**
**D-8521 Poxdorf(DE)**

(54) Vorrichtung zur Ultraschallabtastung.

㊹ Die Erfindung bezieht sich auf eine Vorrichtung zur Ultraschall-Abtastung mit Wandlerelementreihe $W_1$ bis $W_m$ und Signalverzögerungseinrichtung zur Verzögerung anfallender Echosignale in dem Sinne, daß sich am Ausgang Phasengleichheit der Einzelsignale ergibt. Ziel der Erfindung ist es, eine solche Vorrichtung aufzubauen, mit der bei einer vorgegebenen Anzahl von Wandlern die Nebenkeulen in der Richtungsempfindlichkeit der Antenne beseitigt und trotzdem der elektronische Aufwand in Grenzen gehalten werden kann. Dieses Ziel ist dadurch erreicht, daß von der Verzögerungseinrichtung (3) die Signale jeweils gruppenweise auf Einzeladdierer (5-7) gegeben werden, deren Ausgangssignale in einer Einheit zur quasi-multiplikativen Verarbeitung (10) verknüpft werden. Bei digitaler Technik ergibt sich durch Binärsignalverarbeitung eine erhebliche Vereinfachung unter Ausschaltung der störenden Richtungsempfindlichkeit des Auflösungsvermögens.

FIG 2

SIEMENS AKTIENGESELLSCHAFT

Berlin und München

Unser Zeichen
VPA 80 P 5079 E

## Vorrichtung zur Ultraschall-Abtastung

Die Erfindung bezieht sich auf eine Vorrichtung zur Ultraschall-Abtastung mit Ultraschall-Applikator, der durch eine Vielzahl einzelner Wandlerelemente zum Aussenden von Ultraschallsignalen und zum Empfang der Echosignale ausgebildet ist, wobei wenigstens im elektrischen Empfangskreis eine Verzögerungseinrichtung mit nachgeschaltetem Summierverstärker vorgesehen ist, die die anfallenden Echosignale für jedes Wandlerelement zeitlich so verzögert, daß sich in der zeitlichen Reihenfolge des Anfallens von Signalen an den einzelnen Elementen am Summierverstärker Phasengleichheit der Einzelsignale ergibt.

Eine Vorrichtung dieser Art ist beispielsweise durch "Ultrasonics Symposium Proceedings", IEEE CAT. 1977, Seiten 250 bis 254, bekannt. Diese Vorrichtung arbeitet in Analog- oder Digitaltechnik mit Speichergliedern als Verzögerungsnetzwerk, wobei von den Speichergliedern ein gemeinsamer Summenverstärker angesteuert wird. Darüber hinaus wurde auch bereits mit der älteren deutschen Patentanmeldung P 29 42 049.3 vorgeschlagen, die an den Einzelwandlern anfallenden Ultraschallsignale sequentiell digital zu speichern, wodurch sich insbesondere die Möglichkeit einer optimierten Signalverarbeitung ergibt.

Bei Vorrichtungen der eingangs genannten Art bilden m einzelne Wandlerelemente der Breite b ein Array der Gesamtbreite B. Insgesamt läßt sich eine solche Wandleranordnung beispielsweise für phasengesteuerte Array-

Wht 5 Rl / 29.5.1980

Systeme bei Ultraschallgeräten mit Sektorabtastung durch elektronische Strahlschwenkung verwenden, wobei zusätzlich auch eine dynamische Fokussierung möglich ist. Daneben ist die Verwendung bei einem Linear-Array ohne Strahlschwenkung, aber mit dynamischer Fokussierung denkbar. In allen Fällen ist eine gute Auflösung erwünscht. Ist nun die Breite b eines einzelnen Wandlerelementes größer als die Wellenlänge der von dem Array abgestrahlten Ultraschallsignale, so treten aber bekanntermaßen in der Richtungsempfindlichkeit des Arrays Nebenkeulen (sog. "grating lobes") auf, die die laterale Auflösung erheblich beeinträchtigen. Aus diesem Grunde ist man bemüht, die Anzahl der Wandlerelemente im vorgegebenen Aperturbereich so weit wie möglich zu erhöhen, wodurch die Breite b eines Einzelelementes entsprechend verringert werden muß. Bei den phasengesteuerten Array-Systemen wird allerdings dadurch der Aufwand an Ansteuerelektronik mit Vorverstärkern, Verzögerungsleitungen u.dgl. in unerwünschter Weise erhöht, so daß nach anderen Lösungen gesucht wird.

Aufgabe der Erfindung ist es daher, eine Vorrichtung der eingangs genannten Art aufzubauen, bei der die unerwünschten Nebenkeulen in der Richtungsempfindlichkeit beseitigt werden und trotzdem der elektronische Aufwand in Grenzen gehalten wird.

Die Aufgabe wird erfindungsgemäß dadurch gelöst, daß von der Verzögerungseinrichtung die Signale jeweils gruppenweise auf Einzeladdierer gegeben werden, deren Ausgangssignale in einer Einheit zur quasi-multiplikativen Signalverarbeitung verknüpft werden.

Mit der Erfindung wird also die Breite B eines Arrays, das eine Antenne für die Ultraschallsignale bildet, in mehrere gleiche Subantennen unterteilt. Jede dieser Subantennen ist aufgebaut aus Elementen mit einer Breite b, die nun größer als die Wellenlänge sein können. Bei vorgegebener Breite B des Arrays ist dabei der Verlust an lateraler Auflösung wesentlich geringer.

Bei einer erfindungsgemäßen Vorrichtung zur Ultraschall-Abtastung ist insgesamt der Ansteueraufwand erheblich vereinfacht. Da von den Summenverstärkern nach Addition der Einzelsignale bereits das Ergebnis in digitaler Form ausgegeben wird, läßt sich die weitere Verknüpfung der Einzelsignale quasi-multiplikativ ausführen. Die einzelnen Echosignale werden dabei lediglich nur noch als mehr-bit-Information sowie als Vorzeicheninformation weitergegeben.

In vorzugsweiser Weiterbildung der Erfindung bietet es sich an, aus der Ultraschall-Echoinformation gewisse Bereiche abzuschneiden und einheitlich zu bewerten. Hierfür wird von der mehr-bit-Information das LSBwertige bit (last significant bit) zu höheren Werten verschoben und der gesamte abgeschnittene Bereich einheitlich als Null bewertet. Diese Methodik ist in der Digitaltechnik allgemein unter dem Begriff des "FAT ZERO" vorbekannt.

Speziell für die Darstellung von Ultraschallsignalen eines Ultraschall-Applikators mit Arrayanordnung gibt nun das Prinzip des "FAT ZERO" in vorteilhafter Weise die Möglichkeit, die erhaltene Ultraschall-Echoinformation zu selektieren und so darzustellen, daß im aufgebauten Ultraschallbild gezielt die Konturen herausgehoben werden.

Weitere Einzelheiten und Vorteile der Erfindung ergeben sich aus der nachfolgenden Figurenbeschreibung

- 4 -    VPA 80 P 5079  E

eines Ausführungsbeispiels anhand der Zeichnung in
Verbindung mit weiteren Unteransprüchen. Es zeigen:

Fig. 1 ein Prinzipschaltbild der Erfindung,

Fig. 2 die multiplikative Verknüpfungseinheit
als Blockschaltbild,

Fig. 3 anhand eines Diagrammes die quasi-multiplikative Verknüpfung und

Fig. 4 das Prinzip der Signalausblendung gemäß
"FAT ZERO"-Prinzip.

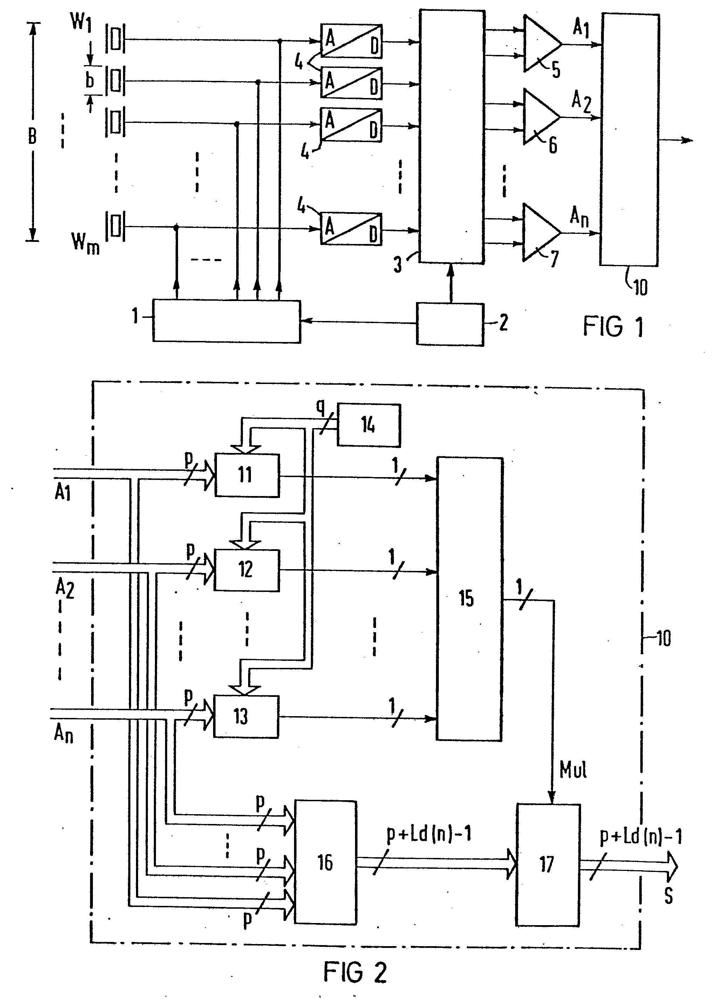

In der Fig. 1 sind mit $W_i$ 1 bis m Ultraschall-Wandlerelemente bezeichnet. Die Wandlerelemente $W_i$ haben jeweils die Einzelbreite b, wobei sich insgesamt eine
Gesamtbreite B der Ultraschallantenne ergibt. Die Wandler
$W_i$ werden von einem Sender 1 phasenverzögert angesteuert, wozu der Sender 1 von einer Steuereinheit 2
nach Programm aktivierbar ist.

Die von den Einzelwandlern $W_i$ aufgrund der Laufzeitunterschiede zeitverzögert erhaltenen Ultraschall-
Echosignale werden über Einzelleitungen auf ein Verzögerungsnetzwerk 3 gegeben, das von der Steuereinheit 2 in Abhängigkeit vom Sendeprogramm gesteuert
ist. Vor dem Verzögerungsnetzwerk sind jeweils identische
Analog-/Digital-Wandler 4 geschaltet, so daß die Ultraschall-Echosignale am Verzögerungsnetzwerk bereits in
digitaler Form vorliegen. Die Verzögerungseinrichtung 3
kann dann entsprechend mit digitalen Speichern ausgelegt sein, wobei sich bereits durch geeignete Speicherorganisation und Schaffung von Teilzeilenspeichern die
Möglichkeit eines minimierten Speicheraufwandes ergibt.

Eine solche Verzögerungs- und Signalverarbeitungseinrichtung ist speziell in der älteren deutschen Patentanmeldung P 29 42 049.3 beschrieben, auf die hier Bezug genommen wird.

Die Ausgänge der einzelnen Einheiten der Verzögerungseinrichtung 3 sind nun - in Abweichung zum Stand der Technik - gruppenweise auf separate digitale Addierwerke geschaltet. In der Fig. 1 ist angedeutet, daß die Leitungen von jeweils zwei Wandlern $W_i$ gruppenweise an die Addierwerke 5 bis 7 angeschlossen sind. Dementsprechend werden also von der Gesamt-Ultraschallantenne mit Einzelwandlern $W_i$ mehrere Subantennen gebildet. Von den digitalen Addierwerken 5 bis 7 werden jeweils die Signale $A_i$ für i = 1 bis n ausgegeben, die jeweils separat eine Einheit zur quasi-multiplikativen Verarbeitung der Signale ansteuern. Diese Einheit ist in der Fig. 1 mit 10 als ein Block dargestellt und wird anhand der Fig. 2 im einzelnen beschrieben.

Nach Digitalisierung und Aufaddierung der Einzelsignale werden die Signale $A_i$ für i = 1 bis n durch eine mehr-bit-Information mit p-bit, beispielsweise 9 bit, gebildet. Diese mehr-bit-Information ist in der Fig. 2 jeweils als Datenbus eingezeichnet, die auf die Eingänge der Einheit 10 gelangen. Jeder Datenbus steuert einen Schwellwertdiskriminator 11 bis 13 an, in dem das Signal gleichgerichtet und mit einem einstellbaren Wert mit q bit verglichen wird. Hierzu werden die Komparatoren 11 bis 13 zur Einstellung eines Vergleichswertes vom Datenbus einer Einstelleinheit 14 angesteuert, welcher eine q bit-Information ausgibt. Die spezielle Verwendung der Einstelleinheit 14 wird weiter unten noch eingehend beschrieben.

Durch Vergleich der Eingangsinformation mit vorgebbaren Werten wird von den Schwellwertkomparatoren 11 bis 13 ein Ausgangssignal mit ein bit erzeugt, das entweder Null oder Eins ist. Diese Signale werden in einer Multiplikationseinheit 15 verknüpft, die wiederum ein Ausgangssignal mit ein bit liefert.

Der Datenbus der Signale $A_i$ für i = 1 bis n wird parallel zu den Schwellwertkomparatoren 11 bis 13 auf ein Summationsglied 16 gegeben. In diesem Summationsglied wird der Absolutbetrag der Signale $A_i$ für i = 1 bis n mit jeweils p bit gebildet. Das Ausgangssignal des Summationsgliedes 16 ist dementsprechend ein Signal mit p + Ld (n) - 1 bit [Ld = def. Logarithmus zur Basis 2]. Diese Information wird zusammen mit dem ein-bit-Signal Mul des Multiplizierers 15 auf einen Multiplexer 17 gegeben, von dem ein Ausgangssignal S wieder mit p + Ld (n) - 1 bit ausgegeben wird. S hat entweder den Wert Null, wenn der Wert Mul = 0 ist, oder das Ergebnis des Addierers 16, wenn Mul = 1 ist. Das Signal S kann anschließend zur Bilddarstellung auf einem Oszilloskop od.dgl. herangezogen werden.

In der Einheit zur quasi-multiplikativen Verarbeitung 10 wird also eine Signalverknüpfung durchgeführt, die sich für zwei Einzelsignale $A_1$ und $A_2$ durch folgende Gleichung darstellen läßt.

$$(A_1 * A_2)_{quasi} = \frac{A_1 * A_2}{|A_1 * A_2|} \cdot |A_1 + A_2| \qquad (1)$$

mit $A_1 \cup A_2 \neq 0$; verallgemeinert gilt für $A_i$:

$$\overset{quasi}{\prod} A_i = \frac{\prod A_i}{|\prod A_i|} \cdot |\sum A_i|, \quad i = 1 - n \qquad (2)$$

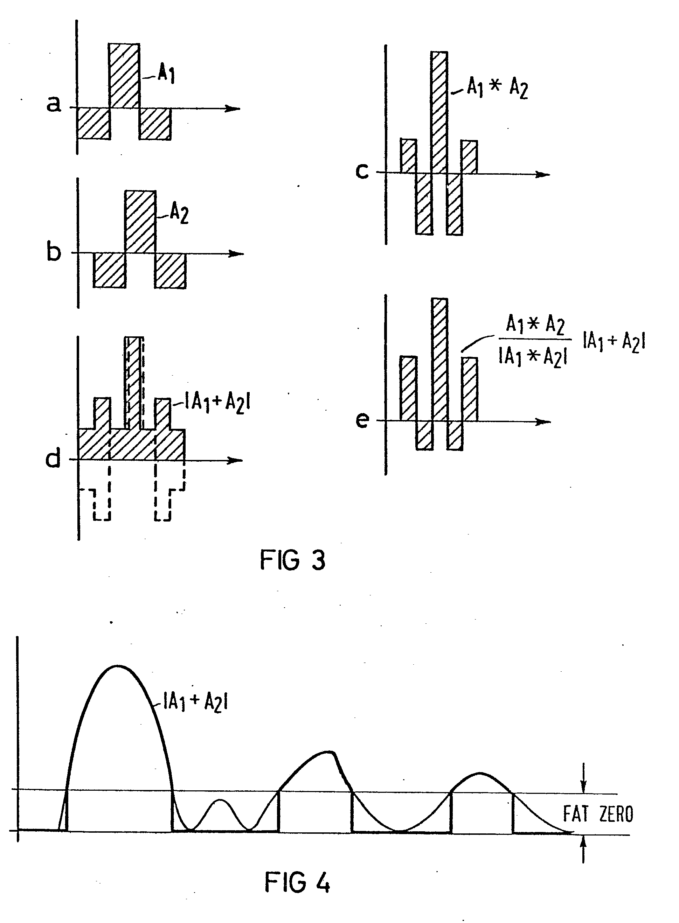

In der Fig. 3 ist die quasi-multiplikative Signalverknüpfung im einzelnen anhand der Diagrammzeilen a) bis
e) gezeigt. Es bedeuten die Zeile a das Signal $A_1$ und
die Zeile b das Signal $A_2$. In der Zeile c sind die
beiden Signale $A_1$ und $A_2$ durch mathematische Multiplikation der Einheitsflächen verknüpft. Die Zeile d
dagegen zeigt gestrichelt die Summation der Signale
$A_1$, $A_2$ sowie durchgezogen den absoluten Betrag der
Summe $|A_1 + A_2|$.

Zeile d läßt sich nun in Zeile c überführen, wenn das
Signal $|A_1 + A_2|$ mit einem Vorzeichenfaktor bewertet
wird. Es ergibt sich das Signal gemäß Zeile e durch quasi-
multiplikative Verknüpfung.

Der Vergleich der Diagrammzeilen c und e zeigt, daß bis
auf die Amplituden gleiche Ergebnisse erhalten werden.
Da das Digitalsignal durch die Binärinformation weitergegeben wird, spielt die Amplitude keine entscheidende
Rolle. Erhalten wird bei der beschriebenen Signalverarbeitung letztendlich ein Signal Plus, Null oder Minus.
Aus den Diagrammzeilen c und e erkennt man jeweils, daß
die Frequenz der Signalfolge sich verdoppelt hat. Diese
Frequenzerhöhung bewirkt eine entsprechende Erhöhung
der Auflösung.

In einfachster Ausgestaltung lassen sich die Schwellwertkomparatoren 11 bis 13 für die Binärsignale durch
Gatter, beispielsweise ODER-Tore, bilden, die Signaleingänge entsprechend der bit-Zahl aufweisen. Dabei ergibt
sich nun die Möglichkeit, von der Binärinformation einen
Teil auszublenden. In praktischer Realisierung werden
dazu die LSB-wertigen bits (last significant bit) nicht
auf die Eingänge der die Komparatoren 11 bis 13 bildenden ODER-Gatter geführt. Im übertragenen Sinne heißt
dies, daß die Schwellwertkomparatoren mit dem Schwellenwert in der Höhe justierbar sind.

In der Digitaltechnik ist speziell dieses Prinzip des Verschiebens des LSB-wertigen bit zu höheren Werten als "FAT ZERO" bekannt. Der gesamte Bereich unterhalb des Schwellenwertes wird also als "verbreiterte" Null bewertet, und nur die Signalinformation über dem "FAT ZERO"-Wert entsprechend weiterverarbeitet.

In der Fig. 4 ist in einem Diagramm ein derartiges Beispiel dargestellt. Dabei ist ein Signal $|\sum A_i|$ bereits gleichgerichtet und nach Fig. 3d addiert, wobei durch die Schwelle nur das durchgezogene Signal zur Weiterverarbeitung ansteht. Es lassen sich so insbesondere Rauschsignale und dgl. gut unterdrücken. Durch Verbreitern bzw. Verschmälern des "FAT ZERO"-Bereiches läßt sich so die Signalinformation gezielt weiterverarbeiten.

Speziell bei der Ultraschall-Signalverarbeitung ergibt sich durch dieses Prinzip jetzt die Möglichkeit, die Struktur des auf einem Monitor aufgebauten Ultraschall-Bildes zu unterdrücken und im Bild gezielt die Konturen hervorzuheben.

Insgesamt ergibt sich durch die Aufteilung der Ultraschallantenne in mehrere Subantennen eine wesentliche Verbesserung der Richtungscharakteristik in Auflösungsvermögen. Die laterale Auflösung wird verbessert; durch die oben beschriebene, quasi-multiplikative Signalverarbeitung wird dabei auch der gesamte elektronische Aufwand in vertretbaren Grenzen gehalten. Wird eine bestimmte Anzahl von Wandlern $W_i$ vorgegeben, so läßt sich für den Einzelfall die Gruppenaufteilung an die Bedürfnisse anpassen, z. B. bei 8 Wandlerelementen 4 Gruppen à 2 Elemente  oder 2 Gruppen à 4 Elemente .

4 Figuren 9 Patentansprüche

Patentansprüche

1. Vorrichtung zur Ultraschall-Abtastung mit Ultraschall-Applikator, der durch eine Vielzahl einzelner Wandlerelemente zum Aussenden von Ultraschallsignalen und zum Empfang der Echosignale ausgebildet ist, wobei wenigstens im elektrischen Empfangskreis eine Verzögerungseinrichtung mit nachgeschaltetem Summierverstärker vorgesehen ist, die die anfallenden Echosignale für jedes Wandlerelement zeitlich so verzögert, daß sich in der zeitlichen Reihenfolge des Anfallens von Signalen an den einzelnen Elementen am Summierverstärker Phasengleichheit der Einzelsignale ergibt, d a d u r c h g e k e n n z e i c h n e t , daß von der Verzögerungseinrichtung (3) die Signale jeweils gruppenweise auf Einzeladdierer (5-7) gegeben werden, deren Ausgangssignale ($A_i$) in einer Einheit zur quasi-multiplikativen Signalverarbeitung (10) verknüpft werden.

2. Vorrichtung nach Anspruch 1, d a d u r c h g e - k e n n z e i c h n e t , daß vor der Verzögerungseinrichtung (3) die Signale in den Signalleitungen zugeordneten Analog-/Digital-Wandlern (4) digitalisiert werden.

3. Vorrichtung nach Anspruch 2, d a d u r c h g e - k e n n z e i c h n e t , daß die Einzeladdierer (5-7) digitale Addierwerke sind.

4. Vorrichtung nach den Ansprüchen 2 und 3, d a - d u r c h g e k e n n z e i c h n e t , daß die Ausgangssignale ($A_i$) der Addierwerke (5-7) als Binärsignale, z. B. mit p-bit, vorliegen.

5. Vorrichtung nach Anspruch 1, d a d u r c h g e - k e n n z e i c h n e t , daß die Einheit zur quasi-multiplikativen Signalverknüpfung (10) zwei Einzelsignale (A$_1$, A$_2$) der Addierwerke entsprechend der Vorschrift

$$(A_1 * A_2)_{quasi} = \frac{A_1 * A_2}{|A_1 * A_2|} |A_1 + A_2| \quad \text{mit } A_1 \vee A_2 \neq 0 \quad (2)$$

verknüpft, wobei A$_i$ die Einzelsignale der Addierwerke
(5-7) mit p bit bedeuten.

6. Vorrichtung nach Anspruch 1 und Anspruch 5, d a -
d u r c h   g e k e n n z e i c h n e t ,   daß die
Einheit zur quasi-multiplikativen Signalverknüpfung (10)
für jedes Ausganssignal (A$_i$) der Addierwerke (5-7) je
einen Schwellwertkomparator (11-13) mit nachgeschaltetem
Multiplizierer (15) zur Bildung eines Vorzeichensignals
(Mul) einerseits und ein gemeinsames Summationsglied
(16) zur Bildung der Absolutsumme der Ausgangssignale
(A$_i$) der Addierer (5-7) andererseits umfaßt, welche
Signale in einem Multiplexer (17) verknüpft werden.

7. Vorrichtung nach Anspruch 6, d a d u r c h   g e -
k e n n z e i c h n e t ,   daß die Schwellenwerte der
Komparatoren (11-13) durch eine Einstelleinheit (14)
justierbar sind.

8. Vorrichtung nach Anspruch 6, d a d u r c h   g e -
k e n n z e i c h n e t ,   daß die Komparatoren (11-13)
durch ODER-Gatter gebildet werden.

9. Vorrichtung nach Anspruch 7 und 8, d a d u r c h
g e k e n n z e i c h n e t ,   daß zur Justierung der
Schwellenwerte die LSB-wertigen bits der Binärinformation von den ODER-Gliedern (11-13) abschaltbar sind.

0041185

FIG 1

FIG 2

0041185

80 P 5079

FIG 3

FIG 4

| EINSCHLÄGIGE DOKUMENTE | | | KLASSIFIKATION DER ANMELDUNG (Int. Cl ³) |
|---|---|---|---|
| Kategorie | Kennzeichnung des Dokuments mit Angabe, soweit erforderlich, der maßgeblichen Teile | betrifft Anspruch | |
| | IEE PROCEEDINGS, Band 127, Part F, Nr. 1, Februar 1980 HITCHIN (GB) D.E.N. DAVIES et al.: "Low side-lobe patterns from thinned arrays using multiplicative processing" Seiten 9 bis 15 <br><br> * Insgesamt * <br> -- | 1 | G 01 S 7/52 <br> G 01 S 7/62 <br> G 06 F 15/336 <br> G 10 K 11/34 |
| | IEEE TRANSACTIONS ON COMPUTERS Band C-29, Nr. 5, Mai 1980 NEW YORK (US) E.E. SWARTZLANDER Jr et al.: "Arithmetic for ultra-high-speed tomography", Seiten 341 bis 353 <br><br> * Seite 341, Zusammenfassung; Seite 344, Abschnitt betitelt: "Arithmetic implementation options"; Seiten 349 bis 351, Abschnitt betitelt: "Sign logarithm convolver" * <br> -- | 5 | |
| D | 1977 ULTRASONICS SYMPOSIUM PROCEEDINGS IEEE CATALOG Nr. 77CH1264-ISU NEW YORK (US) R.E. McKEIGHEN et al.: "New techniques for dynamically variable electronic delays for real time ultrasonic imaging" Seiten 250 bis 254 <br><br> * Insgesamt * <br> -- | | |
| D | DE - A - 29 42 049 (SIEMENS) <br><br> * Insgesamt * <br><br> & EP - A - 0 027 618 <br><br> ------------ | | |

RECHERCHIERTE SACHGEBIETE (Int. Cl.³)

G 01 S 7/52
7/62
15/89
G 06 F 9/38
15/20
15/336
G 10 K 11/34
H 01 Q 3/26

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 26.8.1981 | OLDROYD |

EPA form 1503.1   06.78